# EUROPÄISCHE PATENTSCHRIFT

(11) **EP 2 565 606 B1**
(45) Veröffentlichungstag und Bekanntmachung des Hinweises auf die Patenterteilung: **31.12.2014**
(21) Anmeldenummer: 11179150.5
(22) Anmeldetag: 29.08.2011
(51) Int. Cl.: G01K 13/08, F01D 17/08, G01K 1/16

(54) **Strömungsmaschine mit einem in einem Bereich des Rotors angeordneten Wärmerohr und einer Temperaturmesseinrichtung**
Flow engine with a heat-pipe in a part of the rotor and a temperature sensor
Turbomachine avec un caloduc dans une partie du rotor et un capteur de température

(43) Veröffentlichungstag der Anmeldung: 06.03.2013
(73) Patentinhaber: Siemens Aktiengesellschaft, 80333 München (DE)
(72) Erfinder: Ahaus, Guido, 45133 Essen (DE); Balkowski, Ingo, 47647 Kerken (DE); Flohr, Patrick Ronald, 45478 Mülheim a.d. Ruhr (DE); Heckel, Waldemar, 45357 Essen (DE); Hoell, Harald, 63607 Wächtersbach (DE); Lyko, Christian, 44627 Herne (DE); Ricken, Oliver, 45149 Essen (DE); Sieber, Uwe, 45476 Mülheim an der Ruhr (DE); Stock, Sebastian, 45479 Mülheim (DE); Veitsman, Vyacheslav, 45879 Gelsenkirchen (DE); Woditschka, Frank, 47229 Duisburg (DE)

(56) Entgegenhaltungen:
- FR-A5- 2 185 204
- JP-A- 58 013 106
- US-A- 4 934 137
- US-A- 5 979 220
- SILVERSTEIN C C: "CAN THE HEAT PIPE MEET GAS TURBINE THERMAL MANAGEMENT CHALLENGES OF THE NEXT CENTURY?", GLOBAL GAS TURBINE NEWS, XX, XX, 1. August 1995 (1995-08-01), Seiten 4-7, XP000610239,

## Beschreibung

Die Erfindung betrifft eine Strömungsmaschine mit einem Rotor.

Eine Strömungsmaschine ist eine Fluidenergiemaschine, bei der die Energieübertragung zwischen Fluid und Maschine in einem offenen Raum durch eine Strömung nach den Gesetzen der Fluiddynamik über den Umweg der kinetischen Energie erfolgt. Die Energieübertragung erfolgt normalerweise mittels Rotorblättern, Flügeln oder Schaufeln, die derart profiliert sind, dass durch die Umströmung eine Druckdifferenz zwischen Vorder- und Rückseite entsteht (Tragflächenprofil). Eine Strömungsmaschine besteht typischerweise aus einem rotierenden Teil, dem Rotor, und einem statischen Teil, dem Stator.

Eine Gasturbine ist eine Strömungsmaschine, in der ein unter Druck stehendes Gas expandiert. Sie besteht aus einer Turbine oder Expander, einem vorgeschalteten Verdichter und einer dazwischengeschalteten Brennkammer. Das Wirkungsprinzip beruht auf dem Kreisprozess (Joule-Prozess): Dieser komprimiert über die Beschaufelung einer oder mehrerer Verdichterstufen Luft, mischt diese anschließend in der Brennkammer mit einem gasförmigen oder flüssigen Treibstoff, zündet und verbrennt. Außerdem wird die Luft zur Kühlung insbesondere thermisch stark beanspruchter Bauteile eingesetzt.

So entsteht ein Heißgas (Mischung aus Verbrennungsgas und Luft), das im nachfolgenden Turbinenteil entspannt, wobei sich thermische in mechanische Energie umwandelt und zunächst den Verdichter antreibt. Der verbleibende Anteil wird beim Wellentriebwerk zum Antrieb eines Generators, eines Propellers oder anderen rotierenden Verbrauchern verwendet. Beim Strahltriebwerk dagegen beschleunigt die thermische Energie den heißen Gasstrom, was den Schub erzeugt.

Der Rotor einer Strömungsmaschine ist insbesondere bei Gasturbinen ein thermisch und mechanisch hoch beanspruchtes Bauteil. Insbesondere beim Kaltstart der Strömungsmaschine werden die Rotorscheiben sehr stark beansprucht. Einerseits werden die Rotoren im Bereich der Schaufelfüße, mittels derer die Schaufeln an einer Rotorwelle befestigt sind, stark erwärmt, andererseits wird der Rotor von Kühlluft durchströmt, damit die Materialtemperatur nicht die Festigkeitsgrenzen überschreitet.

Die sich im Inneren des Rotors einstellenden Strömungsstrukturen und Wärmeübergangseffekte sind äußerst komplex und seit Jahrzehnten weltweit Gegenstand der universitären Forschung. Dies gilt erst recht für die transienten Vorgänge beim An- und Abfahren der Maschinen.

Die im Rotor auftretenden Temperaturen und insbesondere die Temperaturgradienten, die zu Thermospannungen führen, werden in der Praxis zurzeit konservativ, d. h. eher zur sicheren Seite hin abgeschätzt. Hierbei kommt häufig die FEM (Finite-Elemente-Methode) zu Anwendung, ein numerisches Verfahren zur Lösung von partiellen Differentialgleichungen, mit dem Festkörpersimulationen durchgeführt werden können. Die Randbedingungen werden hier anhand einzelner Prototypenmessungen bestimmt. Hier werden teilweise auch Stichprobenmessungen der Temperatur einzelner Rotorkomponenten durchgeführt.

Die so gewonnenen Daten werden genutzt, um einerseits die maximale Anzahl an Startzyklen abzuschätzen, die ein Rotor übersteht, bevor er ausgetauscht werden muss, und um andererseits eine in einigen Fällen notwendige Vorheizzeit des Rotors abzuschätzen, die erforderlich ist, um Thermospannungen auf ein erträgliches Maß zu reduzieren und die Anzahl an erlaubten Startzyklen hoch genug zu halten.

Allerdings bedeutet ein Abwarten einer bestimmten Zeit vor der Inbetriebnahme Rotors stets einen erhöhten Energieverbrauch und eine längere Anlaufzeit der Strömungsmaschine, was gerade z. B. bei Gas- und Dampfturbinenkraftwerken unerwünscht ist, da diese oft kurzfristige Leistungsspitzenanforderungen des Stromnetzes decken müssen.

Aufgabe der Erfindung ist es daher, eine Strömungsmaschine anzugeben, welche ein schnelleres Anfahren erlaubt, ohne dabei die Lebensdauer des Rotors zu reduzieren, und gleichzeitig bessere Vorhersagen über die verbleibende Lebensdauer des Rotors ermöglicht.

Diese Aufgabe wird erfindungsgemäß gelöst, indem die Strömungsmaschine eine Temperaturmesseinrichtung aufweist, wobei sich von einem Bereich des Rotors bis in den Bereich der Temperaturmesseinrichtung ein Wärmerohr derart erstreckt, dass in einem Betriebszustand die Wärme aus dem zu messenden Bereich des Rotors über das Wärmerohr zur Temperaturmesseinrichtung (132) übertragen wird.

Die Erfindung geht dabei von der Überlegung aus, dass ein schnelleres Anfahren und eine bessere Abschätzung der Lebensdauer insbesondere dadurch möglich wäre, dass besonders genaue und aktuelle Daten zum Temperaturverhalten des Rotors zur Verfügung gestellt werden. Hierzu können beispielsweise basierend auf der Anpassung an transiente Temperaturverläufe aus FEM-Modellen analytische Temperaturformeln abgeleitet werden, mit Hilfe derer die Materialtemperatur anhand erfasster Betriebsdaten abgeschätzt werden kann. Eine derartige Abschätzung muss jedoch hinsichtlich der Betriebssicherheit und Lebensdauer stets konservativ ausfallen. Dies kann z. B. dazu führen, dass beim Anfahren das Abwarten der entsprechenden Temperaturverhältnisse unnötig lange dauert oder sogar der Startvorgang der Strömungsmaschine verriegelt wird, obwohl die erforderliche Materialtemperatur erreicht ist, aber durch die Temperaturformel als zu niedrig abgeschätzt wird.

Daher sollte die Genauigkeit der Temperaturbestimmung weiter verbessert werden. Dies ist erreichbar, indem die Temperatur in dem interessierenden Bereich des Rotors direkt gemessen wird. Allerdings ist hierbei problematisch, dass einige Bereiche des Rotors, insbesondere die besonders thermisch belasteten Scheibennaben, im Inneren der Strömungsmaschine angeordnet und daher schwer zugänglich sind. Daher sollte eine Möglichkeit gefunden werden, die Materialtemperatur an einer besser zugänglichen Stelle des Rotors zu messen. Dies ist erreichbar, indem die Temperaturmesseinrichtung an einer solchen besser zugänglichen Stelle angebracht ist und der zu messende Bereich über ein Wärmerohr, eine so genannte Heatpipe, die die Wärme gut leitet, mit dem Bereich der Temperaturmesseinrichtung verbunden ist. Somit wird die Wärme aus dem zu messenden, schwer zugänglichen Bereich zur Temperaturmesseinrichtung übertragen.

Damit unterscheidet sich die vorliegende Erfindung von herkömmlichen direkten Messverfahren mit Messfühlern etwa in Dampfturbinen, wie sie bspw. aus der JP 58013106A1 bekannt sind.

Die Schrift US 5979220 A offenbart zudem eine Vorrichtung, welche erlaubt, einen Sensor in einer Verbrennungsturbine thermisch mittels eines Wärmerohrs zu schützen, in welchem sich der Sensor befindet. Die Verwendung von Wärmerohren in Verbrennungsturbinen ist zudem aus der FR 2185204 A5 bekannt.

Damit kann jedoch keine der Schriften das Vorsehen eines Wärmerohrs zur vorteilhaften Wärmeübertragung von einem zu messenden Bereich zu einem Bereich offenbaren oder auch nur nahe legen, an welchem sich die Messvorrichtung befindet und der Messvorgang erfolgt.

Vorteilhafterweise ist der Bereich des Rotors der im Vergleich zu anderen Bereichen der thermisch am höchsten belastete Bereich. Nicht alle Bereiche des Rotors der Strömungsmaschine sind nämlich im Betrieb gleich hoch belastet. So sind z. B. die Scheiben-Naben des Rotors vergleichsweise hoch belastete Teile. Um keine Temperaturmessung in sämtlichen Bereichen durchführen zu müssen, sollte sichergestellt werden, dass in jedem Fall die hoch belasteten Bereiche, die für die Lebensdauerberechnung kritisch sind, genau gemessen werden. So wird bei reduziertem Aufwand die Lebensdauerbestimmung des Rotors verbessert.

Vorteilhafterweise ist die Temperaturmesseinrichtung auf einem Stator der Strömungsmaschine angeordnet. Dadurch ist eine besonders einfache und leicht erreichbare Anordnung der Temperaturmesseinrichtung möglich. Über das Wärmerohr wird die Wärme entlang den Rotorbauteilen radial nach außen transportiert, wo das Ende des Wärmerohrs vom Stator aus eingesehen werden kann, wo die Temperaturmesseinrichtung angeordnet ist.

In weiterer vorteilhafter Ausgestaltung ist die Temperaturmesseinrichtung als berührungslose Temperaturmesseinrichtung ausgestaltet. Hier können beispielsweise optische Messverfahren oder ein Infrarotmessgerät zur Anwendung kommen. Insbesondere bei einer Anbringung der Temperaturmesseinrichtung auf dem Stator entfällt so die Telemetrie für die Übertragung von Signalen vom rotierenden zum stationären System. Dies ermöglicht eine dauerhafte Temperaturmessung, die vergleichsweise deutlich weniger anfällig für Ausfälle ist, da keine mechanischen Belastungen auftreten.

Vorteilhafterweise ist die Temperaturmesseinrichtung zumindest teilweise von einem Isoliermaterial ummantelt. Die Temperaturmesseinrichtung ist nämlich trotz der Verlegung aus dem schwer zugänglichen Bereich dennoch in einem thermisch hoch belasteten Bereich angeordnet. Eine Isolierung schützt die Temperaturmesseinrichtung und verhindert gleichzeitig eine Verfälschung des Messergebnisses durch Wärmeeintrag aus dem hier vorbeiströmenden Fluid.

In alternativer oder zusätzlicher vorteilhafter Ausgestaltung ist in dem Bereich der Temperaturmesseinrichtung ein Sperrluftröhrchen angeordnet. Dieses leitet mit vergleichsweise hohem Druck Luft aus der Kühlluftzufuhr der Strömungsmaschine in den Bereich der Temperaturmesseinrichtung, so dass das vorbeiströmende Fluid abgelenkt wird. Auch dadurch wird ein Wärmeeintrag verhindert, der das Messergebnis verfälschen könnte.

Weiterhin ist das Wärmerohr vorteilhafterweise zumindest teilweise von einem Isoliermaterial ummantelt. Die Isolation des Wärmeleiters sorgt dafür, dass kein Wärmeeintrag von den Bereichen, an denen der Wärmeleiter vorbei führt, das Messergebnis verfälschen kann. Durch eine gute Isolation wird die Temperatur des zu messenden Bereiches ungeändert zur Temperaturmesseinrichtung geführt.

Vorteilhafterweise ist das Wärmerohr mit einem Material in dem Bereich des Rotors stoffschlüssig verbunden. Dies kann in Form von Löten, Schweißen o.ä. auf der Oberfläche erfolgen. Dadurch wird ein guter thermischer Kontakt des Wärmeleiters zur vermessenden Stelle z. B. an der Scheibennabe hergestellt und die Zeitverluste bei der Temperaturübertragung werden weiter minimiert. Die Temperaturmessung wird somit noch weiter verbessert.

Vorteilhafterweise ist die Strömungsmaschine eine Gasturbine. Gerade in Gasturbinen, die die vergleichsweise höchsten thermischen und mechanischen Belastungen an ihren Bauteilen, insbesondere dem Rotor aufweisen, ist die beschriebene Ausgestaltung von erheblichem Vorteil hinsichtlich der Lebensdauerbestimmung und verkürzt die Anfahrzeit ohne Einbußen hinsichtlich der Betriebssicherheit oder Lebensdauer.

Eine derartige Strömungsmaschine kommt vorteilhafterweise in einem Kraftwerk zum Einsatz.

Die mit der Erfindung erzielten Vorteile bestehen insbesondere darin, dass durch die Messung über die gesamte Lebensdauer der Strömungsmaschine aktuelle Daten zum Temperaturverhalten des Rotors zur Verfügung. Mit Hilfe dieser Daten können wesentlich genauere Lebensdauerabschätzungen für Rotoren gemacht werden und die Anzahl der zu erlaubenden Starts entsprechend physikalischer Gegebenheiten aktuell angepasst werden. Dies ist insbesondere bei Anlagen mit häufigen Kaltstarts ein unmittelbarer wirtschaftlicher Vorteil für den Betreiber. Gleichzeitig wird durch eine kontinuierliche Temperaturmessung eine bessere Abschätzung der Rotorlebensdauer und eine Verkürzung des Anfahrprozesses ohne Reduzierung der Lebensdauer ermöglicht. Neben der Zeitersparnis und damit höheren Flexibilität wird dabei auch weniger Energie beim Anfahren verbraucht. Die berührungsfreie Messung der Temperatur in Verbindung mit der Wärmeleitung zum Stator stellt weiterhin ein besonders ausfallsicheres System zur kontinuierlichen Temperaturmessung dar.

Die Erfindung wird anhand einer Zeichnung näher erläutert.

Darin zeigen:
- FIG 1: einen Schnitt durch eine Gasturbine, und
- FIG 2: einen Schnitt durch einen Teilbereich der Gasturbine aus FIG 1.

Gleiche Teile sind in allen Figuren mit denselben Bezugszeichen versehen.

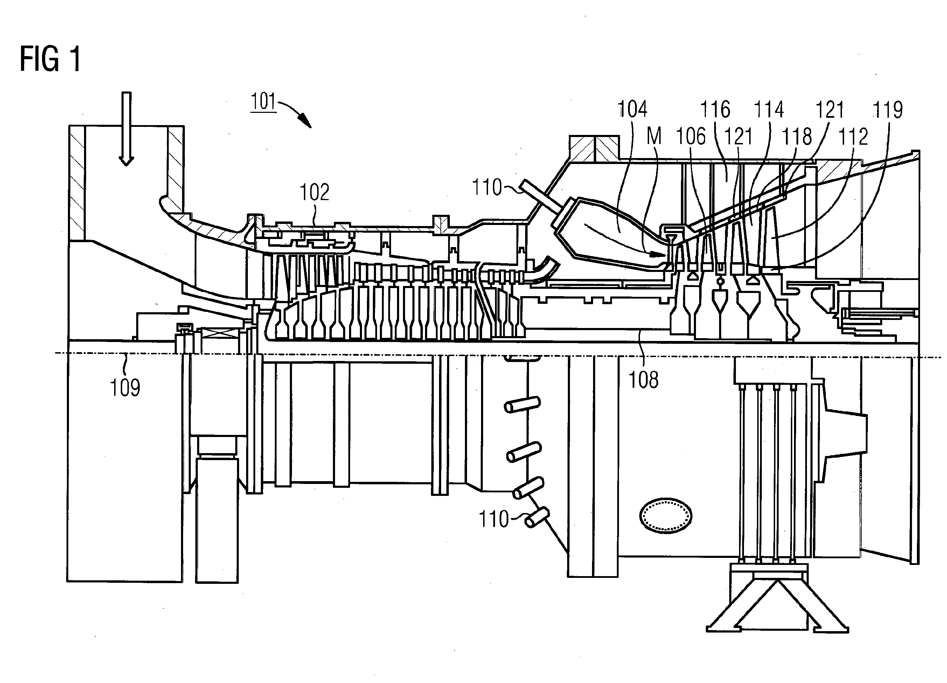

Eine Gasturbine 101, wie in FIG 1 dargestellt, ist eine Strömungsmaschine. Sie weist einen Verdichter 102 für Verbrennungsluft, eine Brennkammer 104 sowie eine Turbineneinheit 106 zum Antrieb des Verdichters 102 und eines nicht dargestellten Generators oder einer Arbeitsmaschine auf. Dazu sind die Turbineneinheit 106 und der Verdichter 102 auf einer gemeinsamen, auch als Turbinenläufer bezeichneten Turbinenwelle 108 angeordnet, mit der auch der Generator bzw. die Arbeitsmaschine verbunden ist, und die um ihre Mittelachse 109 drehbar gelagert ist. Diese Einheiten bilden den Rotor der Gasturbine 101. Die in der Art einer Ringbrennkammer ausgeführte Brennkammer 104 ist mit einer Anzahl von Brennern 110 zur Verbrennung eines flüssigen oder gasförmigen Brennstoffs bestückt.

Die Turbineneinheit 106 weist eine Anzahl von mit der Turbinenwelle 108 verbundenen, rotierbaren Laufschaufeln 112 auf. Die Laufschaufeln 112 sind kranzförmig an der Turbinenwelle 108 angeordnet und bilden somit eine Anzahl von Laufschaufelkränzen oder -reihen. Weiterhin umfasst die Turbineneinheit 106 eine Anzahl von feststehenden Leitschaufeln 114, die ebenfalls kranzförmig unter der Bildung von Leitschaufelreihen an einem Leitschaufelträger 116 der Turbineneinheit 106 befestigt sind. Die Laufschaufeln 112 dienen dabei zum Antrieb der Turbinenwelle 108 durch Impulsübertrag vom die Turbineneinheit 106 durchströmenden Arbeitsmedium M. Die Leitschaufeln 114 dienen hingegen zur Strömungsführung des Arbeitsmediums M zwischen jeweils zwei in Strömungsrichtung des Arbeitsmediums M gesehen aufeinander folgenden Laufschaufelreihen oder Laufschaufelkränzen. Ein aufeinander folgendes Paar aus einem Kranz von Leitschaufeln 114 oder einer Leitschaufelreihe und aus einem Kranz von Laufschaufeln 112 oder einer Laufschaufelreihe wird dabei auch als Turbinenstufe bezeichnet.

Jede Leitschaufel 114 weist eine Plattform 118 auf, die zur Fixierung der jeweiligen Leitschaufel 114 an einem Leitschaufelträger 116 der Turbineneinheit 106 als Wandelement angeordnet ist. Die Plattform 118 ist dabei ein thermisch vergleichsweise stark belastetes Bauteil, das die äußere Begrenzung eines Heißgaskanals für das die Turbineneinheit 106 durchströmende Arbeitsmedium M bildet. Jede Laufschaufel 112 ist in analoger Weise über eine auch als Schaufelfuß bezeichnete Plattform 119 an der Turbinenwelle 108 befestigt.

Zwischen den beabstandet voneinander angeordneten Plattformen 118 der Leitschaufeln 114 zweier benachbarter Leitschaufelreihen ist jeweils ein Ringsegment 121 an einem Leitschaufelträger 1 der Turbineneinheit 106 angeordnet. Die äußere Oberfläche jedes Ringsegments 121 ist dabei ebenfalls dem heißen, die Turbineneinheit 106 durchströmenden Arbeitsmedium M ausgesetzt und in radialer Richtung vom äußeren Ende der ihm gegenüber liegenden Laufschaufeln 112 durch einen Spalt beabstandet. Die zwischen benachbarten Leitschaufelreihen angeordneten Ringsegmente 121 dienen dabei insbesondere als Abdeckelemente, die das Innengehäuse im Leitschaufelträger 116 oder andere Gehäuse-Einbauteile vor einer thermischen Überbeanspruchung durch das die Turbine 106 durchströmende heiße Arbeitsmedium M schützen.

Die Brennkammer 104 ist im Ausführungsbeispiel als so genannte Ringbrennkammer ausgestaltet, bei der eine Vielzahl von in Umfangsrichtung um die Turbinenwelle 108 herum angeordneten Brennern 110 in einen gemeinsamen Brennkammerraum münden. Dazu ist die Brennkammer 104 in ihrer Gesamtheit als ringförmige Struktur ausgestaltet, die um die Turbinenwelle 108 herum positioniert ist.

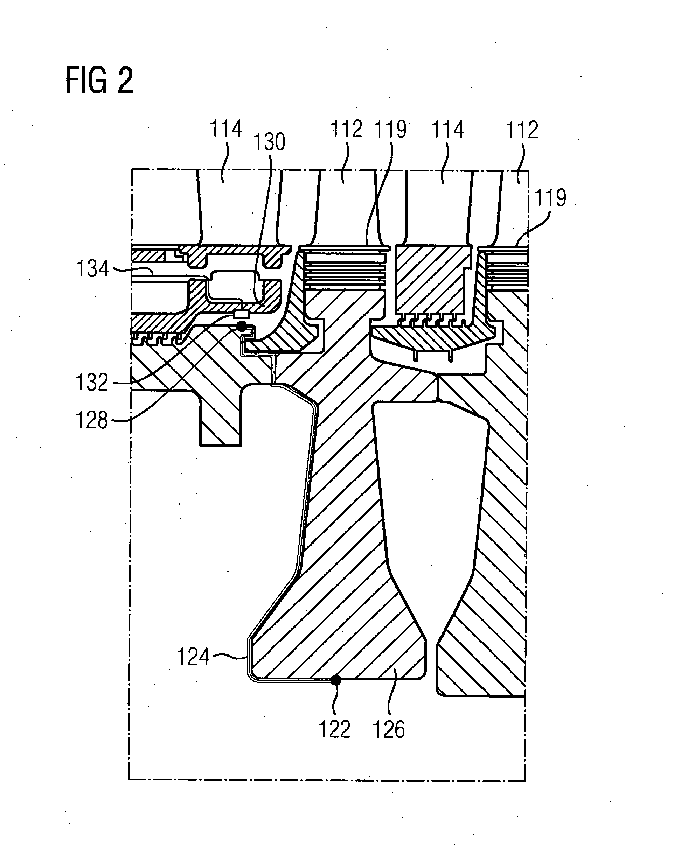

Um nun eine bessere Vorhersage über die Lebensdauer des Rotors und die notwendigen eventuellen Vorheizzeiten zu ermöglichen, ist die Gasturbine 101 für eine Temperaturmessung im Rotor ausgelegt. Dies ist in FIG 2 gezeigt, die einen vergrößerten Schnitt durch die Gasturbine 101 im Bereich des Rotors darstellt.

Gezeigt ist hier die in Strömungsrichtung des Gases erste und zweite Leitschaufelreihe mit den Leitschaufeln 114, sowie die Laufschaufeln 112 der ersten und zweiten Laufschaufelreihe mit den Plattformen 119. Die Temperaturmessung erfolgt nun in dem thermisch am höchsten belasteten Bereich der nicht näher dargestellten Scheibennabe. Von der Messstelle 122 führt ein mit einem Isoliermaterial ummanteltes Wärmerohr 124, eine so genannte Heatpipe entlang der Kontur der Rotorscheibe 126 im Wesentlichen radial nach außen bis zu einem Absatz 128 der Rotorscheibe 126, der einer stationären Leitscheibe 130 gegenüber liegt. An der Messstelle 122 ist das Wärmerohr mit der Leitscheibe 130 verschweißt oder anderweitig stoffschlüssig verbunden.

An der Leitscheibe 130 ist eine Temperaturmesseinrichtung 132 angeordnet, die als Infrarotmesseinrichtung ausgelegt ist. Alternativ kann auch eine optische Messung erfolgen. In jedem Fall kann die Temperatur an dem Absatz 128, die durch die Verbindung mit dem Wärmerohr 124 der Temperatur an der Messstelle 122 entspricht, berührungslos gemessen werden. Um Verfälschungen der Temperatur zu vermeiden, sind nicht näher dargestellte Sperrluftröhrchen sowie eine Isolierung vorgesehen, die einen Wärmeeintrag vom strömenden Fluid in die Temperaturmesseinrichtung 132 verhindern. Die erfassten Temperaturdaten werden über eine Datenleitung 134 zur Weiterverarbeitung geleitet.

Durch die Temperaturmessung wird einerseits die Anfahrzeit der Gasturbine 101 reduziert. Andererseits stehen Temperaturdaten des Rotors zur Verfügung, was besonders genaue Vorhersagen hinsichtlich der Lebensdauer der Gasturbine 101 ermöglicht.

## Patentansprüche

1. Strömungsmaschine (101) mit einem Rotor und einer Temperaturmesseinrichtung (132),
**dadurch gekennzeichnet, dass** sich von einem Bereich des Rotors bis in den Bereich der Temperaturmesseinrichtung (132) ein Wärmerohr (124) derart erstreckt, dass in einem Betriebszustand die Wärme aus dem zu messenden Bereich des Rotors über das Wärmerohr zur Temperaturmesseinrichtung (132) übertragen wird.

2. Strömungsmaschine (101) nach Anspruch 1,
bei der der Bereich des Rotors der im Vergleich zu anderen Bereichen thermisch am höchsten belastete Bereich ist.

3. Strömungsmaschine (101) nach einem der vorhergehenden Ansprüche,
bei der die Temperaturmesseinrichtung (132) auf einem Stator der Strömungsmaschine (101) angeordnet ist.

4. Strömungsmaschine (101) nach einem der vorhergehenden Ansprüche,
bei der die Temperaturmesseinrichtung (132) als berührungslose Temperaturmesseinrichtung (132) ausgestaltet ist.

5. Strömungsmaschine (101) nach einem der vorhergehenden Ansprüche,
bei der die Temperaturmesseinrichtung (132) zumindest teilweise von einem Isoliermaterial ummantelt ist.

6. Strömungsmaschine (101) nach einem der vorhergehenden Ansprüche,
bei der in dem Bereich der Temperaturmesseinrichtung (132) ein Sperrluftröhrchen angeordnet ist.

7. Strömungsmaschine (101) nach einem der vorhergehenden Ansprüche,
bei der das Wärmerohr (124) zumindest teilweise von einem Isoliermaterial ummantelt ist.

8. Strömungsmaschine (101) nach einem der vorhergehenden Ansprüche,
bei der das Wärmerohr (124) mit einem Material in dem Bereich des Rotors stoffschlüssig verbunden ist.

9. Strömungsmaschine (101) nach einem der vorhergehenden Ansprüche,
die als Gasturbine (101) ausgelegt ist.

10. Kraftwerk mit einer Strömungsmaschine (101) nach einem der vorhergehenden Ansprüche.

## Claims

1. Turbomachine (101) having a rotor and a temperature measurement device (132),
**characterized in that** a heat pipe (124) extends from a region of the rotor to the region of the temperature measurement device (132) such that, in an operating state, the heat from that region of the rotor which is to be measured is transmitted to the temperature measurement device (132) via the heat pipe.

2. Turbomachine (101) according to Claim 1,
in which the region of the rotor is the most highly thermally loaded region in comparison with other regions.

3. Turbomachine (101) according to either of the preceding claims,
in which the temperature measurement device (132) is arranged on a stator of the turbomachine (101).

4. Turbomachine (101) according to one of the preceding claims,
in which the temperature measurement device (132) is configured as a contactless temperature measurement device (132).

5. Turbomachine (101) according to one of the preceding claims,
in which the temperature measurement device (132) is at least partially surrounded by a thermally insulating material.

6. Turbomachine (101) according to one of the preceding claims,
in which a small barrier air pipe is arranged in the region of the temperature measurement device (132).

7. Turbomachine (101) according to one of the preceding claims,
in which the heat pipe (124) is at least partially surrounded by a thermally insulating material.

8. Turbomachine (101) according to one of the preceding claims,
in which the heat pipe (124) is connected in a material-bonded manner with a material in the region of the rotor.

9. Turbomachine (101) according to one of the preceding claims,
which is designed as a gas turbine (101).

10. Power station having a turbomachine (101) according to one of the preceding claims.

## Revendications

1. Turbomachine ( 101 ) ayant un rotor et un dispositif ( 132 ) de mesure de la température,
**caractérisée en ce qu'**un caloduc ( 124 ) s'étend d'une partie du rotor jusqu'à la partie du dispositif ( 132 ) de mesure de la température, de manière à transmettre, dans un état de fonctionnement, la chaleur de la partie à mesurer du rotor au dispositif ( 132 ) de mesure de la température par le caloduc.

2. Turbomachine ( 101 ) suivant la revendication 1,
dans laquelle la partie du rotor est la partie la plus sollicitée thermiquement par rapport à d'autres parties.

3. Turbomachine ( 101 ) suivant l'une des revendications précédentes,
dans laquelle le dispositif ( 132 ) de mesure de la température est disposé sur un stator de la turbomachine ( 101 ).

4. Turbomachine ( 101 ) suivant l'une des revendications précédentes,
dans laquelle le dispositif ( 132 ) de mesure de la température est conformé en dispositif ( 132 ) de mesure de la température sans contact.

5. Turbomachine ( 101 ) suivant l'une des revendications précédentes,
dans laquelle le dispositif ( 132 ) de mesure de la température est entouré au moins en partie d'une matière isolante.

6. Turbomachine ( 101 ) suivant l'une des revendications précédentes,
dans laquelle une tubulure d'air d'arrêt est disposée dans la partie du dispositif ( 132 ) de mesure de la température.

7. Turbomachine ( 101 ) suivant l'une des revendications précédentes,
dans laquelle le caloduc ( 124 ) est entouré au moins en partie d'une matière isolante.

8. Turbomachine ( 101 ) suivant l'une des revendications précédentes,
dans laquelle le caloduc ( 124 ) est relié à complémentarité de matière à un matériau de la partie du rotor.

9. Turbomachine ( 101 ) suivant l'une des revendications précédentes,
qui est conçue sous la forme d'une turbine ( 101 ) à gaz.

10. Centrale électrique ayant une turbomachine ( 101 ) suivant l'une des revendications précédentes.
